# EUROPEAN PATENT APPLICATION

(11) **EP 4 620 602 A1**
(43) Date of publication of application: **24.09.2025**
(21) Application number: 24382292.1
(22) Date of filing: 18.03.2024
(51) Int. Cl.: B23B 39/00, B23B 41/00, B23B 5/28, B23B 31/16

(54) **RAILWAY WHEEL BORING MACHINE FOR MACHINING THE BORE OF THE HUB OF A RAILWAY WHEEL**

(71) Applicant: Danobat S. Coop., 20870 Elgoibar (ES)
(72) Inventor: BILBAO UGALDE, Ibon, 20600 Eibar (ES)
(74) Representative: Galbaian S.Coop.

(57) **Abstract**

Railway wheel boring machine for machining the bore (16) of the hub (15) of a railway wheel (10) comprising a base (101), a column (102), a workhead (103) sliding on the column (102), a rotatory boring bar (104) arranged on the workhead (103) and a non-rotatory clamping plate (105) having a clamping unit (106) for clamping and centring the railway wheel (10) comprising at least three jaws (118) which move along straight paths (T) converging at the centre (C') of the non-rotatory clamping plate (105), wherein each jaw (118) is attached to a transmission rod (119) having a first end (120) attached to the jaw (118) and a second end (121) attached to a slewing ring (122) and the slewing ring (122) is driven by actuators (123) such that the actuators (123) rotate the slewing ring (122) to drive the transmission rods (119) and move the jaws (118) securing the railway wheel (10).

## Description

### TECHNICAL FIELD

The present invention relates to a railway wheel boring machine for machining the bore of the hub of a railway wheel.

### PRIOR ART

The railway wheel is one of the elements most exposed to loads during rail vehicle operation. For this reason, it is of great importance for the safety of rail transport that the connection between the wheels and the wheel axle is made securely by means of a shrink fit. Therefore, high precision is required for machining the bore of the hub of the railway wheel where the axle is connected.

Traditionally, the bore of the hub of the railway wheel is machined on a vertical lathe, where the wheel is fixed in a rotating clamping plate that rotates the wheel and a cutting tool arranged in the workhead of the lathe machines the bore of the hub of the wheel while the wheel rotates. Such vertical lathes are used for various machining tasks and reprofiling processes of the railway wheel, so they are versatile machines, but they are also expensive and, in some cases, cannot meet the current high precision requirements demanded by the railway industry for processing the bore of the wheel, so for this task, alternatively to vertical lathes, boring machines are used.

In boring machines, the railway wheel is securely clamped in a non-rotatory clamping plate and a rotatory boring bar penetrates the bore of the hub of the railway wheel for machining it. In this case, the static clamping of the wheel ensures high machining accuracy.

For example, EP4292737A2 shows a railway wheel boring machine for machining the bore of the hub of a railway wheel. The boring machine comprises a base, a column fixed to the base vertically protruding upwards from the base, a workhead attached to the column and vertically slidably on the column, a rotatory boring bar arranged in the workhead for machining the bore of the hub of the railway wheel and a non-rotatory clamping plate for arranging the railway wheel. The clamping plate has a clamping unit for fixing and centring the wheel which has three jaws, three spindles and three hydraulic motors. Each motor drives a spindle which is attached to a jaw, and the three spindles are synchronised to move the three jaws synchronously.

### DISCLOSURE OF THE INVENTION

The object of the invention is to provide a railway wheel boring machine for machining the bore of the hub of a railway wheel, as defined in the claims.

The invention relates to a railway wheel boring machine for machining the bore of the hub of a railway wheel, comprising a base, a column fixed to the base vertically protruding upwards from the base, a workhead attached to the column and vertically slidably on the column, a rotatory boring bar arranged in the workhead for machining the bore of the hub of the railway wheel and a non-rotatory clamping plate for arranging the railway wheel. The non-rotatory clamping plate has a clamping unit for fixing and centring the railway wheel on the non-rotatory clamping plate so that the centre of the railway wheel is aligned with the longitudinal axis of the rotatory boring bar when the railway wheel is fixed on the non-rotatory clamping plate. The clamping unit comprises at least three jaws for clamping the railway wheel which move along straight paths converging at the centre of the non-rotatory clamping plate, wherein each jaw is attached to a transmission rod having a first end attached to the jaw and a second end attached to a slewing ring, and the slewing ring is driven by actuators, such that the actuators rotate the slewing ring to drive the transmission rods and move the jaws securing the railway wheel.

The actuators indirectly move the jaws via the transmission rods, so that the transmission rods allow an optimal arrangement of the actuators below the clamping plate with minimum space requirement, while the slewing ring synchronises the movement of the three jaws by guiding the movement of the transmission rods. This results in a boring machine with a compact clamping plate, both in width and height, which allows railway wheels of different diameters to be fixed and centred in a safe way for the machining of the bore of the hub of the wheel. For example, on a boring machine with spindles as shown in EP4292737A2, the wheel can be securely centred and fixed on the clamping plate, but the drive of the jaws requires the clamping plate to be oversized to accommodate the hydraulic motors and spindles.

These and other advantages and features of the invention will become apparent in view of the figures and the detailed description of the invention.

### DESCRIPTION OF THE DRAWINGS

Figure 1 shows a perspective view of an example of a railway wheel boring machine according to the invention.
Figure 2 shows a top perspective view of the non-rotatory clamping plate of the boring machine.
Figure 3 shows a view of the inside of the clamping plate showing the jaws, transmission rods, actuators and slewing ring.
Figure 4 shows a sectional view of the clamping plate.
Figure 5 shows a bottom view of the clamping plate.
Figure 6 shows the actuators in a maximum retracted position and Figure 7 shows the actuators in a maximum extended position.
Figure 8 shows a partially sectional perspective view of a railway wheel.

### DETAILED DISCLOSURE OF THE INVENTION

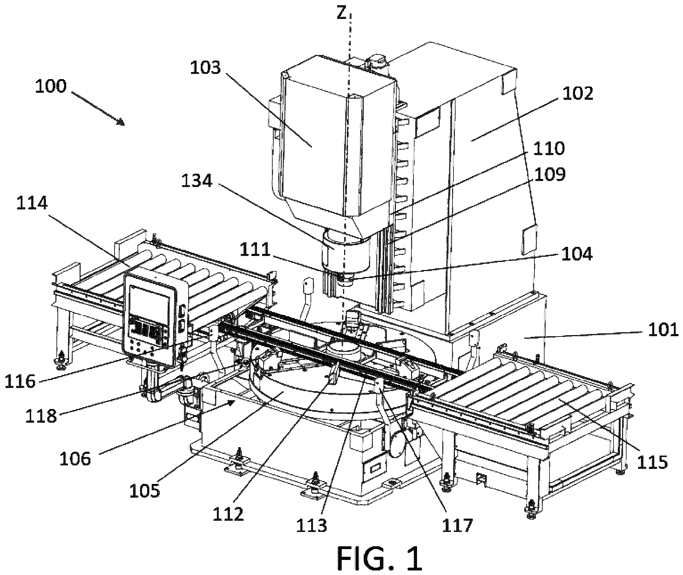

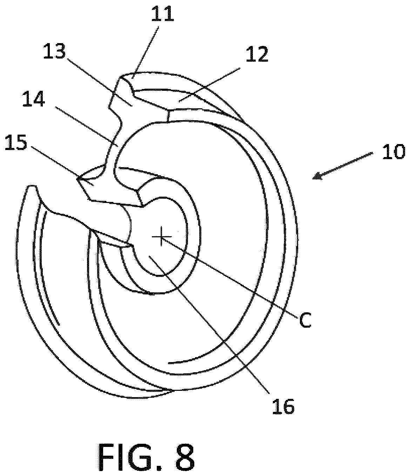

Figure 8 shows the structure of a railway wheel 10 comprising a flange 11, a tread 12, a rim 13, a web 14 and a hub 15 with a bore 16 in which the wheel axle is mounted. The railway wheel 10 has a centre C corresponding to the centre of the bore 16. Figure 1 shows an example of a railway wheel boring machine 100 according to the invention which is used for fixing and centring a railway wheel 10 with respect to its centre C and machining the bore 16 of the hub 15 of the railway wheel 10. For the sake of clarity, the wheel 10 and the outer casing of the boring machine 100 are not shown in Figure 1.

The railway wheel boring machine 100 comprises a base 101, a column 102 fixed to the base 101 vertically protruding upwards from the base 101, a workhead 103 attached to the column 102 and vertically slidably on the column 102, a rotatory boring bar 104 arranged in the workhead 103 for machining the bore 16 of the hub 15 of the railway wheel 10 and a non-rotatory clamping plate 105 for arranging the railway wheel 10.

The non-rotatory clamping plate 105 has a clamping unit 106 for fixing and centring the railway wheel 10 on the clamping plate 105 so that the centre C of the railway wheel 10 is aligned with the longitudinal axis Z of the rotatory boring bar 104 when the railway wheel 10 is fixed on the clamping plate 105. As seen in Figure 1, the boring bar 104 has a longitudinal axis Z that extends perpendicular to the horizontal plane of the floor on which the boring machine 100 is arranged.

The workhead 103 is driven by a first motor which moves the workhead 103 vertically on the column 102 and the rotatory boring bar 104 is driven by a second motor which rotates the boring bar 104. The boring bar 104 rotates about its own longitudinal axis Z and the workhead 103 moves vertically along an axis perpendicular to the horizontal plane of the floor on which the boring machine 100 is arranged.

The column 102 may have guide rails 109 extending vertically on the column 102 and the workhead 103 may have a sliding seat 110 that is slidably connected to the guide rails 109 of the column 102. The sliding seat 110 may be attached to a nut-spindle mechanism that is driven by the first motor to move the workhead 103 over the column 102.

The rotatory boring bar 104 has at least one cutting tool 111 that protrudes radially outwardly from the boring bar 104 to machine the bore 16 of the railway wheel 10. The cutting tool 110 can be moved laterally about an axis perpendicular to the longitudinal axis Z of the boring bar 104 to vary the distance by which the cutting tool 111 protrudes from the boring bar 104, so that by varying such distance the diameter of the hole 16 of the railway wheel 10 to be machined can be changed.

In this way, when the railway wheel 10 is fixed on the clamping plate 105, the workhead 103 with the boring bar 104 moves vertically towards the clamping plate 105 and the boring bar 104 rotates about its longitudinal axis Z to machine the bore 16 of the hub 15 of the railway wheel 10.

As shown in Figure 1, preferably the clamping plate 105 has seats 112 to support the railway wheel 10 and belts 113 vertically movable between an upper position where the belts 113 are above the seats 112 to receive the railway wheel 10 and a lower position where the belts 113 are below the seats 112 for the railway wheel 10 to rest on the seats 112 (in Figure 1 the belts 113 are shown in the lower position). The railway wheel 10 rests on the seats 112 on the inner side of the rim 13, on the side opposite to where the flange 12 is located.

Even more preferably, the clamping plate 105 has a loading unit 114 that transfers the railway wheel 10 towards the belts 113 and a discharge unit 115 that receives the railway wheel 10 from the belts 113. For example, the loading unit 114 and the discharge unit 115 may comprise motor-driven rotating rollers. The belts 113 of the clamping plate 105 are driven by a motor to receive the wheel 10 from the loading unit 114 and transfer the wheel 10 towards the discharge unit 115 after it has been machined. In the upper position, the belts 113 are arranged at the height of the loading unit 114 and the discharge unit 115, so that when a wheel 10 is to be machined, the loading unit 114 transfers the wheel 10 towards the belts 113 which are in the upper position, then the belts 113 move the wheel 10 to position the wheel 10 above the seats 112, then the belts 113 move to the lower position until the wheel 10 rests on the seats 112, then the clamping unit 106 fixes and centres the wheel 10 to be machined by the boring bar 104, and after machining, the belts 113 move to the upper position so that the wheel 10 no longer rests on the seats 112 and the belts 113 transfer the wheel 10 towards the discharge unit 115. In this way, the belts 113 make an initial centring of the wheel 10 on the clamping plate 105 and subsequently the clamping unit 106 makes a final centring of the wheel 10 so that the centre C of the wheel 10 is aligned with the longitudinal axis Z of the boring bar 104.

Preferably, the clamping plate 105 has a first detection device 116 arranged at one end of the belts 113 to detect the entry of a railway wheel 10 from the loading unit 114 and a second detection device 117 arranged at another end of the belts 113 to detect the exit of the railway wheel 10 towards the discharge unit 115. The first detection device 116 is arranged at the end of the belts 113 adjacent to the loading unit 114 and the second detection device 117 is arranged at the end of the belts 113 adjacent to the discharge unit 114. Each detection device 116 and 117 may comprise a laser emitter and a laser receiver.

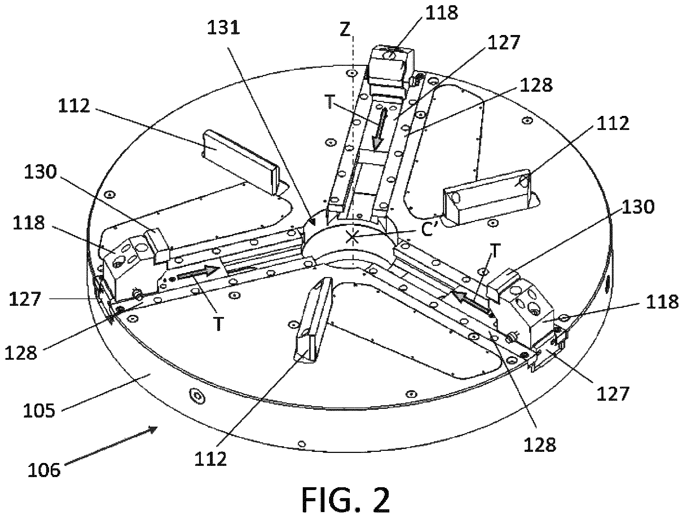

As shown in detail in Figure 2, the clamping unit 106 has three jaws 118 for clamping the railway wheel 10 which move along straight paths T converging at the centre C' of the clamping plate 105. This centre C' of the clamping plate 105 coincides with the centre C of the bore 16 of the hub 15 of the railway wheel 10 when the railway wheel 10 is fixed and centred on the clamping plate 105.

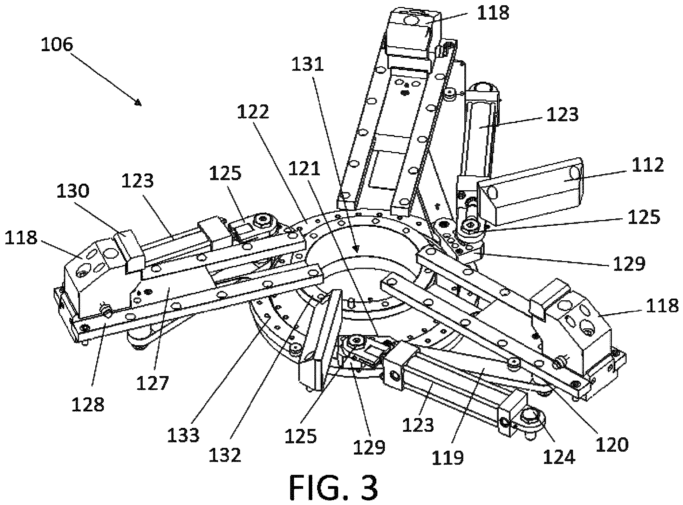

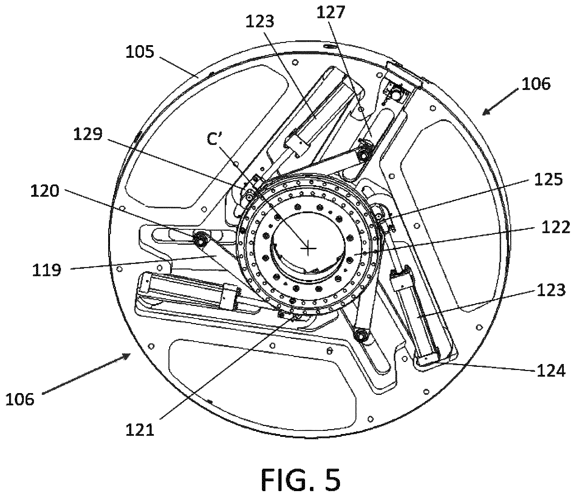

As seen in detail in Figures 3 to 5, each jaw 118 is attached to a transmission rod 119 having a first end 120 attached to the jaw 118 and a second end 121 attached to a slewing ring 122, and the slewing ring 122 is driven by actuators 123 such that the actuators 123 rotate the slewing ring 122 to drive the transmission rods 119 and move the jaws 118 securing the railway wheel 10.

In this way, the rectilinear displacement of the actuators 123 is converted into a turning movement of the slewing ring 122 which, in turn, via the transmission rods 119, is converted into a rectilinear displacement of the jaws 118, which makes it possible to generate an optimum clamping force on the railway wheel 10 and at the same time to obtain a compact clamping plate 105 which optimises the space occupied and which can fix wheels 10 of different diameters without the clamping plate 105 having to be oversized in size. For example, the clamping unit allows each jaw 118 to apply a force of 2500 kg on the wheel 10 and can fix wheels 10 with a diameter of between 711 mm and 1200 mm.

Preferably, as can be seen in the example figures, the fixing unit 106 has three actuators 123 for driving the slewing ring 122, however, and alternatively, only two actuators 123 could be used to drive the slewing ring 122, however, it is preferable to use one actuator 123 for each of the three jaws 118 to avoid having to oversize the force to be exerted by the actuators 123. Even more preferably, the actuators 123 act on three angular positions of the slewing ring 122 which are 120° out of phase with each other, so that a balanced system of forces is obtained.

Even more preferably, each actuator 123 is attached to the second end 121 of a respective transmission rod 119. In this way, the actuators 123 act directly on the transmission rods 119 that displace the jaws 118, thereby optimising the force exerted by each of the actuators 123 to pull a respective transmission rod 119. Specifically, each actuator 123 has a fixed end 124 and a free end 125 which is displaceable with respect to the fixed end 125, the free end 125 is attached to the second end 121 of a respective transmission rod 119 and the fixed end 124 is attached to the non-rotatory clamping plate 105.

As can be seen in the figures, the jaws 118 are arranged in the upper part of the clamping plate 105 and the actuators 123, the transmission rods 119 and the slewing ring 122 are arranged in the lower part of the clamping plate 105 without protruding radially outwards from the clamping plate 105, i.e. the actuators 123, the rods 119 and the slewing ring 122 do not protrude from the vertical projection of the clamping plate 105, resulting in a clamping plate 105 that is compact in width and height.

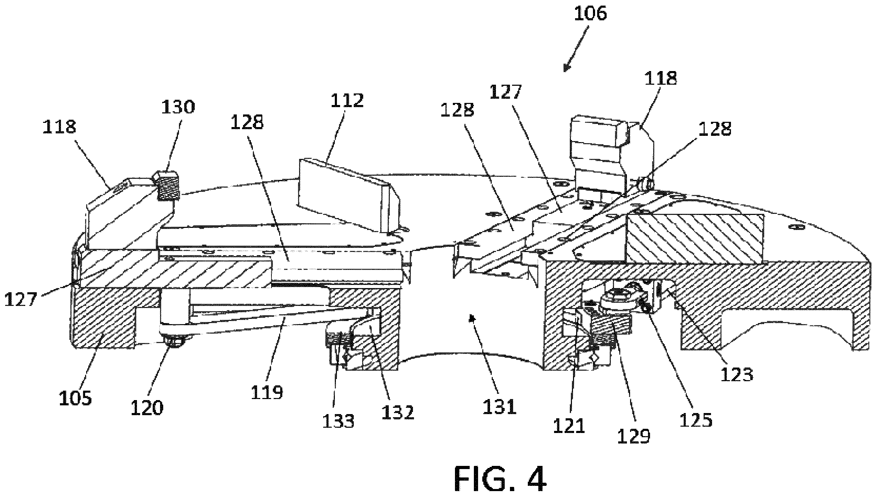

As seen in the partial section view of Figure 4, each jaw 118 has a sliding seat 127 which travels on a pair of guide rails 128 of the clamping plate 105 which converge towards the centre C' of the clamping plate 105 and each sliding seat 127 is attached to a respective transmission rod 119. The guide rails 128 on which the sliding seats 127 of the jaws 118 move are arranged in the upper part of the clamping plate 105 and at the lower part of the clamping plate 105 are arranged the transmission rods 119 and actuators 123 acting on the slewing ring 122.

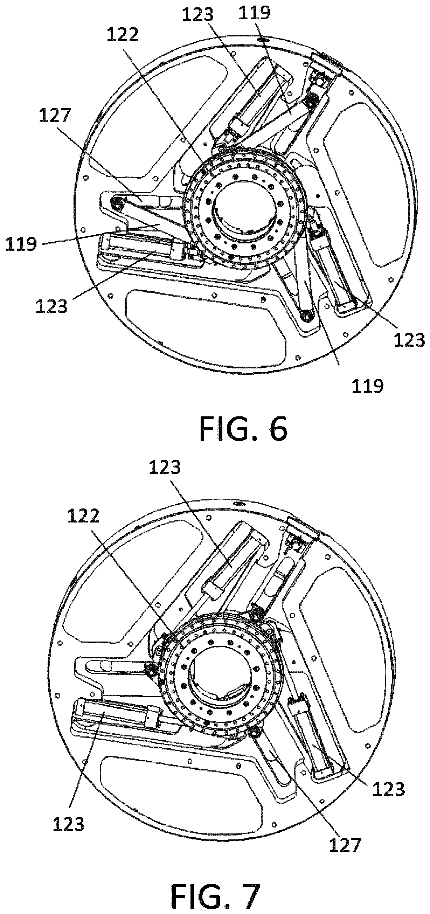

The clamping plate 105 has an outer periphery located at a position opposite the centre C' of the clamping plate 105, and the fixed end 124 of each actuator 123 is fixed at a point located on the outer periphery of the clamping plate 105, and the jaws 118 are displaced from said outer periphery towards the centre C' of the clamping plate 105, so that the actuators 123 are located in a position substantially parallel to the displacement of the jaws 118. According to the example shown in the figures, the clamping plate 105 has a preferably circular shape and the outer periphery of the clamping plate 105 corresponds to the outer diameter of said circular shape. Figure 6 shows the actuators 123 in a maximum retracted position with the jaws 118 located on the outer periphery of the clamping plate 105 and Figure 7 shows the actuators 123 in a maximum extended position with the jaws 118 located at the centre C' of the clamping plate 105.

Each transmission rod 119 is hingedly connected to a respective actuator 123 via an intermediate piece 129, wherein each intermediate piece 129 hingedly connects the free end 125 of the actuator 123 to the second end 121 of the transmission rod 119. The size of the intermediate piece 129, as well as the length of the rods 119 and the actuators 123, and the diameter of the slewing ring 122 is selected according to the diameter of the wheels 10 to be attached to the clamping plate 105.

Preferably, each jaw 118 has a contact surface 130 for fixing the railway wheel 10 by the wheel tread 12. Securely fixing the wheel 10 requires applying a high clamping force, so it is preferable to apply the force on the tread 12, rather than on other structurally less strong areas of the wheel 10, such as the flange 11.

The slewing ring 122 has an inner ring 132 which is fixed to the non-rotatory clamping plate 105 and a movable outer ring 133 which is fixed to the transmission rods 119. Bearings are located between the inner ring 132 and outer ring 133.

Preferably, the actuators 123 are hydraulic cylinders.

Even more preferably, the actuators 123 may be connected to a hydraulic fluid supply unit (not shown) which may have a flow divider to equally divide the hydraulic fluid supplied to each actuator, to promote synchronised movement of the actuators 123.

The clamping plate 105 has a central hole 131 for chip evacuation which is connected to the bore 16 of the hub 15 of the railway wheel 10 when the railway wheel 10 is fixed on the non-rotatory clamping plate 105. Preferably, the central hole 131 has a diameter greater than the diameter of the bore 16 of the hub 15 of the railway wheel 10 to be machined, so that chips are evacuated through the central hole 131. Additionally, the rotatory boring bar 104 may have a cover 134 vertically movable with respect to the workhead 103 to contact the railway wheel 10 and isolate the bore 16 of the hub 15 of the railway wheel 10 when it is being machined, so as to promote chip evacuation through the central hole 131 of the clamping plate 105.

## Claims

1. Railway wheel boring machine for machining the bore (16) of the hub (15) of a railway wheel (10), comprising a base (101), a column (102) fixed to the base (101) vertically protruding upwards from the base (101), a workhead (103) attached to the column (102) and vertically slidably on the column (102), a rotatory boring bar (104) arranged in the workhead (103) for machining the bore (16) of the hub (15) of the railway wheel (10) and a non-rotatory clamping plate (105) for arranging the railway wheel (10), the non-rotatory clamping plate (105) has a clamping unit (106) for fixing and centring the railway wheel (10) on the non-rotatory clamping plate (105) so that the centre (C) of the railway wheel (10) is aligned with the longitudinal axis (Z) of the rotatory boring bar (104) when the railway wheel (10) is fixed on the non-rotatory clamping plate (105), the clamping unit (106) comprises at least three jaws (118) for clamping the railway wheel (10) which move along straight paths (T) converging at the centre (C') of the non-rotatory clamping plate (105), **characterised in that** each jaw (118) is attached to a transmission rod (119) having a first end (120) attached to the jaw (118) and a second end (121) attached to a slewing ring (122), and the slewing ring (122) is driven by actuators (123) such that the actuators (123) rotate the slewing ring (122) to drive the transmission rods (119) and move the jaws (118) securing the railway wheel (10).

2. Boring machine according to claim 1, wherein the clamping unit (106) has three actuators (123) for driving the slewing ring (122).

3. Boring machine according to claim 2, wherein the actuators (123) act on three angular positions of the slewing ring (122) which are 120° out of phase with each other.

4. Boring machine according to claim 2 or 3, wherein each actuator (123) is attached to the second end (121) of a respective transmission rod (119).

5. Boring machine according to claim 4, wherein each actuator (123) has a fixed end (124) and a free end (125) which is displaceable with respect to the fixed end (125), the free end (125) is attached to the second end (121) of a respective transmission rod (119) and the fixed end (124) is attached to the non-rotatory clamping plate (105).

6. Boring machine according to claim 5, wherein the fixed end (124) of each actuator (123) is fixed at a point located on the outer periphery of the non-rotatory clamping plate (105) and the straight paths (T) for moving the jaws (118) are set between the outer periphery of the non-rotatory clamping plate (105) and the centre (C') of the non-rotatory clamping plate (105).

7. Boring machine according to claim 5 or 6, wherein each transmission rod (119) is hingedly connected to a respective actuator (123) via an intermediate piece (129), and wherein each intermediate piece (129) hingedly connects the free end (125) of the actuator (123) to the second end (121) of the transmission rod (119).

8. Boring machine according to any of the preceding claims, wherein each jaw (118) has a contact surface (130) for fixing the railway wheel (10) by the wheel tread (12).

9. Boring machine according to any of the preceding claims, wherein the non-rotatory clamping plate (105) has a central hole (131) for chip evacuation which is connected to the bore (16) of the hub (15) of the railway wheel (10) when the railway wheel (10) is fixed on the non-rotatory clamping plate (105).

10. Boring machine according to the preceding claim, wherein the central hole (131) has a diameter greater than the diameter of the bore (16) of the hub (15) of the railway wheel (10) to be machined.

11. Boring machine according to claim 9 or 10, wherein the rotatory boring bar (104) has a cover (134) vertically movable with respect to the workhead (103) to contact the railway wheel (10) and isolate the bore (16) of the hub (15) from the railway wheel (10) when it is being machined.

12. Boring machine according to any of the preceding claims, wherein the slewing ring (122) has an inner ring (132) which is fixed to the non-rotatory clamping plate (105) and a movable outer ring (133) which is fixed to the transmission rods (119).

13. Boring machine according to any of the preceding claims, wherein the actuators (123) are connected to a hydraulic fluid supply unit having a flow divider to equally divide the hydraulic fluid supplied to each actuator (123).

14. Boring machine according to any of the claims, wherein the clamping plate (105) has seats (112) to support the railway wheel (10) and belts (113) vertically movable between an upper position where the belts (113) are above the seats (112) to receive the railway wheel (10) and a lower position where the belts (113) are below the seats (112) for the railway wheel (10) to rest on the seats (112).

15. Boring machine according to the preceding claim, wherein the clamping plate (105) has a first detection device (116) arranged at one end of the belts (113) to detect the entry of a railway wheel (10) from a loading unit (114) and a second detection device (117) arranged at another end of the belts (113) to detect the exit of the railway wheel (10) towards a discharge unit (115).
